# EUROPÄISCHE PATENTSCHRIFT

(11) **EP 0 914 207 B1**
(45) Veröffentlichungstag und Bekanntmachung des Hinweises auf die Patenterteilung: **25.04.2001**
(21) Anmeldenummer: 97938850.1
(22) Anmeldetag: 23.07.1997
(51) Int. Cl.: B01J 37/14, B01J 23/889

(54) **VOLLMETALLISCHER OXIDATIONSKATALYSATOR**
COMPLETELY METALLIC OXIDATION CATALYST
CATALYSEUR D'OXYDATION ENTIEREMENT METALLIQUE

(30) Priorität: 26.07.1996 DE 19630250
(43) Veröffentlichungstag der Anmeldung: 12.05.1999
(73) Patentinhaber: Krupp VDM GmbH, 58791 Werdohl (DE)
(72) Erfinder: HERDA, Wilfried, D-40489 Düsseldorf (DE); HEUBNER, Ulrich, D-58791 Werdohl (DE); KOPPE, Jürgen, D-06258 Schkopau (DE); LAUSCH, Hartmut, D-06128 Halle (DE)
(86) Internationale Anmeldenummer: EP9703976
(87) Internationale Veröffentlichungsnummer: WO9804347

(56) Entgegenhaltungen:
- EP-A- 0 753 345
- DE-C- 4 416 469
- DE-C- 19 503 865
- GB-A- 309 743

## Beschreibung

Die Erfindung betrifft einen vollmetalischen Katalysator für die Oxidation kohlenmonoxid- und/oder kohlenwasserstoffhaltiger und/oder rußhaltiger Gemische in der Gasphase.

DE 44 16 469 Cl offenbart einen Nickel, Mangan, Chrom und Eisen enthaltenden vollmetallischen Oxidationskatalysator mit welcbem die Totaloxidation von Konlenwasserstoffen zu Kohlendioxid und Wasser durchgeführt wird. Dieser Katalysator wird aus einer Legierung mit (in Masse-%) 10 bis 50 % Nickel, bis 50 % Kupfer, bis 10 % Mangan, 10 bis 30 % Chrom und bis 50 % Eisen durch thermische Behandlung unter sauerstoffhaltiger Atmosphäre für eine Zeit von 0,25 bis 10 Stunden bei Temperaturen von 400 bis 1 000 °C erzeugt. Nach dieser exidierenden thermischen Behandlung kann eine Reduktion mit einem kohlenwasserstoffhaltigen Gemisch durchgeführt werder.

Bei diesen und bei anderen bekannten Oxidationskatalysatoren besteht der Nachteil, daß sie erst im Temperaturbereich oberhalb 400 °C die organischen Komponenten in Gasströmen oxidieren und das insbesondere Rußteilchen im Temperaturbereich unterhalb von 500 °C nicht oxidiert werden.

Damit besteht in Gegenwart von Rußteilchen die Gefahr, daß die Katalysatoroberfläche bei relativ niedrigen Arbeitstemperaturen unterhalb von 500 °C durch Rußteilchen so abgedeckt wird, daß sie nicht mehr katalytisch aktiv ist. Dies ist auch immer dann der Fall, wenn ein Abgaskatalysator nicht im optimalen Arbeits- und Temperaturbereich betrieben wird, also etwa in der Anlauf- oder Startphase bei Kfz-Diesel-Katalysatoren. Fur solche und viele weitere Einsatzfalle ist es erwünscht, daß der Katalysator bereits in der relativ "kalten" Phase bei Temperaturen von bis zu 100 °C katalytisch wirksam ist.

Der Erfindung liegt nun die Aufgabe zugrunde, einen einfach herzustellenden, leicht zu entsorgender und leistungsfähigen Katalysator für die Totaloxidatior von kohlenwasserstoffhaltigen und/oder rußhaltgen Gasgemischen bereitzustellen, der schon in einem niedrigen. Tamperaturbereich katalytisch wirksam wird, der ohne großen Aufwand regeneriert werden kann und zugleich über eine hohe Wärmeleitfahigkeit verfügt.

Diese Aufgabe wird durch die Merkmale des Anspruchs 1 gelöst.

Vorteilhafte Ausgestaltungen der Erfindung sind in den Unteransprüchen gekennzeichnet.

Der Katalysator kann in Draht- oder Spanform und/oder jeder anderen Form mit hinreichend großer spezifischer Oberfläche eingesetzt werden.

Der erfindungsgemäße Katalysator verfügt über eine gut haftende katalytisch wirksame Schicht, eine hohe katalytische Aktivität und eine hohe Wärmeleitfähigkeit.

Ein möglicher Abfall in der katalytischen Aktivität läßt sich bei den erfindungsgemäße Katalysatoren - gegebenenfalls nach einer mechanischen, chemischen oder physikalisch-chemischen Reinigung der Oberfläche - durch eine Wiederholung der thermischen Behandlung beheben, an die sich gegebenenfalls eine erneute Behandlung mit einer wäßrigen Lösung, die oxidierbare organische Substanzen, wie z. B. Zucker, Stärke, Latex, Polyacrylat und/oder Polyvinylalkohol enthält, sowie eine erneute Modifizierung mit mindestens einem der Elemente Bor, Aluminium, Indium, Germanium, Zinn, Blei, Scandium, Yttrium, Lanthan, Titan, Zirkonium, Vanadium, Niob, Chrom, Molybdän, Wolfram, Mangan, Technetium, Rhenium, Eisen, Kobalt, Nickel, Kupfer, Cer, Praseodym, Neodym in der oben beschriebenen Weise anschließt.

Der verbrauchte und nicht mehr regenerierbare Katalysator wird eingeschmolzen und erneut zum erfindungsgemäßen Katalysator verarbeitet.

Die Erfindung wird durch nachfolgende Beispiele erläutert (alle Angaben in Masse-%).

### Beispiele

In einem Strömungsrohrreaktor wurden jeweils 2,0 g Katalysator in Drahtform mit einem Durchmesser von 0,25 mm gegeben. Die Versuche erfolgten bei unterschiedlichen Temperaturen und einem Druck von 1 bar unter folgenden Belastungen: 10 Nl/h Luft mit jeweils 5 000 ppm eines der nachfolgend genannten Kohlenwasserstoffe.

| Kohlenwasserstoff | Katalysator | T [°C] | Umsatz zu CO₂ und H₂O [%] |
|---|---|---|---|
| Beispiel 1 n-Hexan | Eine Legierung, bestehend aus 56,6 % Fe, 16,5 % Cr, 24,2 % Mn, 1,0 % Mo, 0,8 % Cu, 0,40 % N, Rest Ni, Ti, Nb, Al, C, P, wurde 1 h bei 875 °C unter Luft geglüht. Nach dem Abkühlen wurde die Legierung 15 Minuten lang in 10 ml einer wäßrigen Lösung, die 1,5 % Polyvinylalkohol enthielt, sowie 50 g/l Cu²⁺ - und 10 mg/l Mn²⁺-Inonen, gegeben, herausgenommen und erneut 1 h lang bei 450 °C unter Luft geglüht. | 350 | 100 |
| Beispiel 2 Benzen | Eine Legierung, bestehend aus 71,8 % Mn, 17,55 % Cu, 10,4 Ni, 0,1 % Fe, sowie 0,04 % Si, 0,009 % S und 0,017 % C, wurde 1,5 h lang bei 650 °C unter lufthaltiger Atmosphäre geglüht. Nach dem Abkühlen wurde die Legierung 15 Minuten lang in eine wäßrigen Lösung mit 2 % Stärke und 200 g/l Cu²⁺-Ionen gegeben, herausgenommen und erneut 1 h lang bei 500 °C in Luft geglüht. | 350 | 100 |
| Beispiel 3 n-Hexan | Eine Legierung, bestehend aus 71,8 % Mn, 17,55 % Cu, 10,4 % Ni, 0,1 % Fe, sowie 0,04 % Si, 0,009 % S und 0,017 % C, wurde 1,5 h lang bei 650 °C unter lufthaltiger Atmosphäre geglüht. Nach dem Abkühlen wurde die Legierung 10 Minuten lang in eine wäßrige Lösung mit 2 g/l Cu²⁺-Ionen und danach in 2-%ige Polyvinylalkohollösung gegeben, herausgenommen und erneut 1 h lang bei 500 °C in Luft geglüht. | 300 | 92 |
| Beispiel 4 Toluen | Eine Legierung, bestehend aus 53,72 % Fe, 24,2 % Cr, 17,7 % Ni, 6,14 % Mn, 4,34 % Mo, 0,53 % Cu, 0,17 % Nb, 0,12 % Al, sowie 0,46 % N, 0,004 % S, 0,012 % C und 0,017 % P, wurde 2 h lang bei 900 °C unter Luft geglüht. Nach dem Abkühlen wurde die Legierung 10 Minuten lang in 10 ml einer wäßrigen Lösung, die 1 % Polyvinylalkohol sowie 100 g/l Fe³⁺ -, 100 g/l Cu²⁺ - und 2 g/l Mo⁶⁺ - Ionen enthielt gegeben, herausgenommen und erneut 1 h lang bei 700 °C in Luft geglüht. | 350 | 100 |
| Beispiel 5 n-Hexan | Eine Legierung, bestehend aus 50,85 % Co, 19,95 % Cr, 14,8 % W, 2,28 % Fe, 1,53 % Mn, sowie 0,096 % C, 0,004 % S und 0,006 % P, wurde 0,45 h lang bei 1 000 °C unter Luft geglüht. Nach dem Abkühlen wurde die Legierung 3 Minuten lang in 10 ml einer 5-%igen wäßrigen Kristallzuckerlösung und danach in eine Lösung mit 150 g/l Cu²⁺-, 5 g/l W⁶⁺ - und 25 g/l Co²⁺ - Ionen gegeben, herausgenommen und erneut 1 h lang bei 725 °C in Luft geglüht. | 325 | 100 |
| Beispiel 6 n-Hexan | Eine Legierung, bestehend aus 68,01 % Cu, 30,6 % Ni, 0,70 % Fe, 0,67 % Mn, sowie 0,008 % C, 0,010 % Zn, 0,004 % S und 0,002 % P, wurde 1,2 h lang bei 875 °C unter Luft geglüht. Nach dem Abkühlen wurde die Legierung 2 Minuten lang in 10 ml einer wäßrigen Lösung, die 5 % Kristallzucker sowie 0,5 % Polyvinylalkohol und 20 g/l Cu²⁺ - Ionen enthielt, gegeben, herausgenommen und erneut 1 h lang bei 725 °C in Luft geglüht. | 385 | 94 |
| Beispiel 7 n-Hexan | Eine Legierung, bestehend aus 37,3 % Ni, 35,73 % Fe, 19,45 % Cr, 3,2 % Cu, 2,33 % Mo, 1,51 % Mn, 0,2 % Nb, sowie 0,26 % Si, 0,015 % P, 0,006 % C und 0,003 % S, wurde 2 h lang bei 910 °C unter Luft geglüht. Nach dem Abkühlen wurde die Legierung 2,5 Minuten lang in eine 1-%ige wäßrige Polyvinylalkohollösung und danach in eine Lösung mit 150 g/l Cu²⁺-Ionen gegeben, herausgenommen und erneut 1 h lang bei 880 °C in Luft geglüht. | 315 | 96 |
| Beispiel 8 n-Hexan | Eine Legierung, bestehend aus 61,05 % Ni, 22,5 % Cr, 15,3 % Mo, 0,68 % Fe, 0,26 % Al, 0,14 % Mn, 0,03 % Co, sowie 0,006 % C, 0,004 % P und 0,002 % S wurde 1 h lang bei 880 °C unter Luft geglüht. Nach dem Abkühlen wurde die Legierung 4 Minuten lang in eine Lösung mit 1,3 % Polyvinylalkohol und 100 g/l Cu²⁺ -, sowie 5 g/l V⁴⁺ - Ionen gegeben, herausgenommen und anschließend 1 h lang bei 450 °C in Luft geglüht. | 375 | 85 |
| Beispiel 9 n-Hexan | Eine Legierung, bestehend aus 45,64 % Fe, 24,7 % Ni, 20,9 % Cr, 6,43 % Mo, 0,90 % Cu, 0,89 % Mn, sowie 0,192 % N, 0,017 % P, 0,006 % C und 0,003 % S wurde 0,5 h lang bei 1 010 °C unter Luft geglüht. Nach dem Abkühlen wurde die Legierung 3 Minuten lang in eine wäßrige Lösung mit 1,5 % Stärke und 0,2 % Polyvinylalkohol und danach in eine Lösung mit 10 g/l Cu²⁺-, 1 g/l W⁶⁺-, 0,1 g/l Al - und 1 g/l Mn²⁺ - Ionen gegeben, herausgenommen und 1,5 h lang bei 460 °C in Luft geglüht. | 370 | 80 |
| Beispiel 10 n-Hexan | Eine Legierung, bestehend aus 32,08 % Fe, 31,3 % Ni, 26,85 % Cr, 1,54 % Mn, 1,34 % Cu, sowie 0,202 % N, 0,015 % P, 0,01 % C und 0,003 % S wurde 2 h lang bei 825 °C unter Luft geglüht. Nach dem Abkühlen wurde die Legierung 2 Minuten lang in 10 ml einer Lösung mit 1,5 % Polyvinylalkohol und 60 g/l Cu²⁺ - sowie 10 g/l Ni²⁺ - Ionen gegeben, herausgenommen und erneut 0,5 h lang in Luft geglüht. | 385 | 95 |

## Patentansprüche

1. Vollmetallischer Katalysator für die Oxidation kohlenmonoxid- und/oder kohlenwasserstoffhaltiger und/oder rußhaltiger Gemische in der Gasphase, der aus einer Legierung aus mindestens drei der Elemente Mangan, Nickel, Kupfer, Kobalt, Chrom, Molybdän, Wolfram, Titan, Zirkonium, Vanadium, Nlob, Aluminium und Eisen besteht, der Gesamtgehalt dieser Elemente mindestens 95 Masse-% beträgt und darüber hinaus bis zu 5 Masse-% Phosphor, Stickstoff, Silizium und Schwefel sowie weitere übliche Verunreinigungen enthält, wobei die Legierung einer ersten oxidierenden thermischen Behandlung in sauerstoffhaltiger Atmosphäre bei einer Temperatur von 250° C bis 1250° C für 0,05 bis 5 Stunden unterworfen wird, daß die Legierung nach dem Abkühlen mit einer eine oxidierbare organische Substanz enthaltenden wäßrigen Lösung oder Emulsion behandelt wird, daß die Cberfläche und/oder die oberflächennahen Bereiche der Legierung mit einem der Elemente Bor, Aluminium, Indium, Germanium, Zinn, Blei, Scandium, Yttrium, Lanthan, Titan, Zirkonium, Vanadium, Niob, Chrom, Molybdän, Wolfram, Mangan, Technetium, Rhenium, Eisen, Kobalt, Nickel, Kupfer, Cer, Praseodym oder Neodym dotiert werden, und daß die Legierung danach einer weiteren thermischen Behandlung in sauerstoffhaltiger Atmosphäre über einen Zeitraum von 5 min bis 3 Stunden bei einer Temperatur von 250° C bis 1250°C unterworfen wird.

2. Vollmetallischer Katalysator nach Anspruch 1,
**dadurch gekennzeichnet,**
daß die zur Dotierung der Oberfläche und/oder der oberflächennahen Bereiche der Legierung verwendeten Elemente der wäßrigen Lösung oder Emulsion in einer Konzentration zugesetzt werden, die maximal der Sättigungskonzentration der Metallverbindung entspricht.

3. Vollmetallischer Katalysator nach Anspruch 1,
**dadurch gekennzeichnet,**
daß die zur Dotierung der Oberfläche und/oder der oberflächennahen Bereiche der Legierung verwendeten Elemente vor der Behandlung mit der wäßrigen Lösung oder Emulsion oder nach einer im Anschluß an die Behandlung mit der wäßrigen Lösung oder Emulsion in einem Temperaturbereich von 30 bis 1250 °C erfolgenden thermischen Zwischenbehandlung aufgebracht werden.

## Claims

1. Completely metallic catalyst for oxidizing carbon monoxide and/or hydrocarbon and/or soot containing mixtures in the gas phase, consisting of an alloy made of at least three of the elements manganese, nickel, copper, cobalt, chromium, molybdenum, tungsten, titanium, zirconium, vanadium, niobium, aluminium and iron, the total contents of these elements being at least 95 % by mass and furthermore containing up to 5 % by mass phosphorous, nitrogen, silicon and sulphur as well as other usual impurities, the alloy being subjected to a first oxidizing thermal treatment in an oxygenic atmosphere at a temperature of 250°C to 1250°C within 0.05 to 5 hours, after cooling the alloy being treated with an aqueous solution or emulsion containing an oxidizable organic substance, the surface and/or the areas proximal to the surface of the alloy being doted with one of the elements boron, aluminium, indium, germanium, tin, lead, scandium, yttrium, lanthanum, titanium, zirconium, vanadium, niobium, chromium, molybdenum, tungsten, manganese, technetium, rhenium, iron, cobalt, nickel, copper, cerium, praseodymium or neodymium and afterwards the alloy being subjected to a further thermal treatment in oxygenic atmosphere during a period of 5 min to 3 hours at a temperature of 250°C to 1250°C.

2. Completely metallic catalyst according to claim 1, characterized in that the elements of the aqueous solution or emulsion used for the dotation of the surface and/or the areas proximal to the surface of the alloy are added in a concentration maximally corresponding to the saturation concentration of the metal compound.

3. Completely metallic catalyst according to claim 1, characterized in that the elements used for the dotation of the surface and/or the areas proximal to the surface of the alloy are applied in an intermediate thermal treatment carried out before the treatment with the aqueous solution or emulsion or after the treatment with the aqueous solution or emulsion within a temperature range of 30 to 1250°C.

## Revendications

1. Catalysateur entièrement metallique pour l'oxidation des mélanges contenant du monoxyde de carbone et/ou des hydrocarbures et/ou de la suie dans la phase gazeuse, composé d'un alliage contenant au moins trois des éléments manganèse, nickel, cuivre, cobalt, chrome, molybdène, tungstène, titane, zirconium, vanadium, niobium, aluminium et fer, le contenu total de ces éléments étant au moins 95 % en poids, et contenant en outre jusqu'à 5 % en poids de phosphore, azote, silicium et soufre ainsi que d'autres impuretés habituelles, l'alliage étant soumis à un premier traitement thermique oxydant dans une atmosphère oxygénée à une température de 250°C à 1250°C pendant 0,05 à 5 heures, après refroidissement l'alliage étant traité avec une solution ou émulsion aqueuse contenant une substance organique oxydable, la surface et/ou les zones proches de la surface de l'alliage étant dopées avec l'un des éléments bore, aluminium, indium, germanium, étain, plomb, scandium, yttrium, lanthane, titane, zirconium, vanadium, niobium, chrome, molybdène, tungstène, manganèse, technetium, rhenium, fer, cobalt, nickel, cuivre, cérium, praséodyme ou néodyme, et après l'alliage étant soumis à un autre traitement thermique dans une atmosphère oxygénée pendant une période de 5 minutes à 3 heures à une température de 250°C à 1250°C.

2. Catalysateur entièrement métallique selon la revendication 1, caractérisé en ce que les éléments de la solution ou émulsion aqueuse utilisés pour le dopage de la surface et/ou des zones proches de la surface de l'alliage sont additionnés dans une concentration qui correspond au maximum à la concentration de saturation du composé de métal.

3. Catalysateur entièrement métallique selon la revendication 1, caractérisé en ce que les éléments utilisés pour le dopage de la surface et/ou des zones proches de la surface de l'alliage sont appliqués pendant un traitement thermique intermédiaire qui s'effectue avant le traitement avec la solution ou émulsion aqueuse ou après le traitement avec la solution ou émulsion aqueuse dans un écart de températures de 30 à 1250°C.
